# EUROPEAN PATENT SPECIFICATION

(11) **EP 2 447 145 B1**
(45) Date of publication and mention of the grant of the patent: **01.01.2014**
(21) Application number: 10354070.4
(22) Date of filing: 29.10.2010
(51) Int. Cl.: B62M 6/75

(54) **Electric drive for a bicycle**
Elektroantrieb für Fahrräder
Commande électrique pour bicyclette

(43) Date of publication of application: 02.05.2012
(73) Proprietor: Hirn, Günther, 6376 Emmetten (CH)
(72) Inventor: Hirn, Günther, 6376 Emmetten (CH)

(56) References cited:
- US-A- 3 961 678
- US-A- 4 924 125
- US-A- 6 093 985
- US-A1- 2003 071 464
- US-A1- 2005 269 146

## Description

### Prior Art

Electric bicycles or e-bicycles are driven by a pedal drive as well as by a supplemental electric drive. The electric drive usually comprises an electric motor located at the axle of the front wheel, of the rear wheel or at the bottom bracket. In order to accommodate the motor drive, the design of an electric bicycle significantly differs from the design of common bicycles. Thus, an electric drive can not be added to common bicycles without substantial modifications, e.g. widening the fork width. Rather, particular designs regarding the wheel support or the bottom bracket are required. Further, common electric drives add a substantial amount of weight to the bicycle.

In US 3,961,678, a supplemental electrical drive for a common bicycle is shown. This supplemental electrical drive comprises an electric DC motor lateral to the circumference of the rear wheel, wherein the electric motor drives a roller supported by a swing arm. ' The roller contacts the circumferential tire of the rear wheel. The electric drive shown in this prior art document requires significant space such that the drive can only be attached to an additional support construction, ie. a carrier mounted at the rear wheel. Further, the electrical drive of US 3,961,678 is fixedly attached to the bicycle and extends on the rear wheel as well as lateral to it. Due to the size and mounting arrangement, the electrical drive shows poor handling properties.

Therefore, it is an object of the invention to provide an electrical drive with improved handling.

### Summary of the Invention

This problem is solved by an electric drive according to claim 1.

The inventive electric drive provides an integrated arrangement of drive and motor leading to a significantly reduced size. Further, the complexity as well as the costs of the inventive electric drive are significantly reduced while the efficiency is significantly increased. The arrangement of the inventive electric drive allows to integrate motor and output drive. Therefore, no parts of the inventive drive extend laterally to the drive which allows flexible mounting, in particular at areas of the bicycle at which the space is limited, eg. at the bottom bracket. Further, the size and weight of the motor is decreased due to the use of a more compact motor. In addition, the motor according to the invention has a significantly reduced wearing and allows higher speeds of the magnetic poles relative to the stator coils an does not the need of an additional reduction drive unit, eg. a gear. The motor of the inventive drive can be a electric-motor. Preferably the motor of the inventive drive is a brushless motor in which no additional space is occupied by a mechanical commutator. Alternatively, the motor can comprises a mechanical commutator having brushes. Further, a brushless motor provides less wearing problems and increased rotational speeds. A brushless motor is a electric motor with an electronic commutation, preferably a synchronous electric motor. Preferably, the inventive drive comprises an electric motor with an external rotor (encompassing the motor's stator) also called "outer rotor motor", in particular a brushless permanent magnet motor.

The invention concerns an electric drive for a bicycle. The supplementary electric drive comprises an electric motor (preferably brushless) and a contact roller having an outer contact surface. This outer surface is adapted to be used as friction drive for a bicycle wheel. The motor comprises a stator having plurality of stator coils as well as corresponding magnetic rotor elements. The magnetic rotor elements are arranged circumferentially around the stator. Further, the rotor elements are fixedly attached to an inner surface of the contact roller. The contact roller (as well as the rotor elements attached thereto) encloses the stator.

According to the invention, the electromechanical motor components are located within the roller, which provides the output drive in form of its (rotating) outer surface. The roller combines electromagnetic elements of the motor, ie. the magnetic rotor elements, and the output drive surface, ie. the outer contact surface. Thus, there is a direct connection between the magnetic rotor elements and the outer contact surface. In particular, the magnetic rotor elements and the outer contact surface are directly connected with each other by the wall of the contact roller. The wall extends between inner surface of the contact roller and the outer contact surface. In particular, the wall is circumferentially closed and continuous, and is provided by one single, homogenous hollow body providing the inner surface as well as the outer contact surface or by an hollow body providing the inner surface, the hollow body being covered with a sleeve providing the outer contact surface. The contact roller encloses the stator and the magnetic rotor element. In particular, the contact roller encloses the coils, ie. The contact roller encloses a stator core on which windings are placed. The coils comprise windings and the core, wherein the core connects the coils magnetically.

The contact roller has a circular cross section and extends along the rotational axis of the motor. The shape of the roller in longitudinal direction of the roller is preferably concave, in particular with a curvature less than the complementary curvature of a running surface of a bicycle tire. Alternatively, the roller can have a cylindrical shape with a constant circular cross section. The roller comprises a metal, in particular steel or a Al-alloy with increased hardness. In particular, the roller comprises a magnetic material having a high magnetic permeability providing a magnetic loop connection for closing the magnetic circuit provided by magnetic elements of the motor. The core of the coils is magnetically connected to the magnetic material; in particular, the core comprises (a part of) the magnetic material. The roller can comprise two materials, one having a high magnetic permeability and another providing a high hardness. The material providing the hardness provides the contact surface. The roller's geometry as well as (at least one of) the material of the roller provide a low magnetic reluctance.

The outer contact surface of the roller is structured for increased friction between contact surface and tire. Preferably, the outer contact surface comprises a plurality of indentations or elevations or both. The indentations or elevations can extend in radial direction only or can extend in a radial direction as well as a perpendicular thereto in a direction inclined to a tangential direction of the roller, eg. in form of grooves. In another embodiment, the outer contact surface can be provided by an additional sleeve fitted onto the roller. This sleeve is preferably replaceable and is made of a partly elastic material, eg. rubber or plastics. The sleeve can comprise anti-slip material at the contact surface, eg. sandpaper. The sleeve can comprise an adhesive inner layer abutting towards the roller. The roller can be provided with fastening elements engaging with corresponding fastening elements in the sleeve. The fastening element can be mechanical elements or adhesive elements, eg. an adhesive layer.

The outer surface is preferably coated with a layer comprising reinforcing particles, e.g. ceramic particles made of ceramic material or ceramic composite material. As an example, the ceramic material can comprise A1₂0₃ (as corundum), SiC, BN or similar materials, preferably with a hardness of at least 1000, 2000 or 2500 (according to Vickers). Advantageously, the layer further comprises a binding component (i.e. a matrix) for fixing the particles to the roller, e.g. aluminum, an aluminum alloy or steel or another metal or alloy. Instead or in combination with ceramic particles, hard materials based on metal or an alloy could be used, e.g. tungsten carbide in order to provide the reinforcing particles. The outer surface can be provided by the roller's outer surface or by sleeve's outer surface. The reinforcing particles and/or the binding component can be provided as an arc sprayed layer.

The stator of the brushless motor is an inner stator, around which the rotor (as outer rotor) is arranged. The stator comprises core elements (made of the magnetic material) as well as windings arranged thereon, both forming the coils. Thus, the stator comprises the coils provided by the core elements and the respective windings arranged thereon. The coils can be electrically grouped together by direct electrical connection within the motor. The coils are grouped according to a three-phase system with a mutual phase shift of n x 120°, n being an integer. Neighboring coils are assigned to distinct phases. The coils are arranged circumferentially in a sequence periodically repeating three distinct phases in the same order. The core elements (as well as the magnetic material) magnetically connected and are made of highly permeable magnetic material, eg. a ferrite or iron or an iron alloy. The core elements extend longitudinal with regard to the stator. The stator is mechanically connected to a static (non-rotating) part of the bicycle via a mounting assembly. The stator windings, ie. the stator coils, are electrically connected to an electrical (electronical) commutator circuit. The stator comprises an armature, on which the windings are arranged. The armature comprises the core elements of the coils as well as magnetic material connecting the core elements. The core elements of the coils as well as magnetic material connecting the core elements of the armature are fixedly connected to each other, wherein the armature provides the magnetic and mechanic connection. The armature comprises an inner opening through which the mounting shaft extends. The mounting shaft and the armature are fixedly connected with each other at an inner wall of the inner opening. The mounting shaft can be directly connected to the armature, such that the mounting shaft and the armature physically contact each other. In a preferred embodiment, the mounting shaft is connected to the armature via a mechanical damper element, e.g. elastic bushings as described below. The armature comprising the core elements and the magnetic material connecting the core elements can be provided as a stack of sheets of magnetically permeable material. The sheets are stacked along the longitudinal axis of the motor. In order to reduce eddy current losses, the sheets are electrically insulated, preferably by an insulation coating.

Magnetic rotor elements are arranged around the stator and are supported by the inner surface of the contact roller. The magnetic rotor elements are preferably permanent magnets, in particular rare earth magnets. The magnets can be neodymium, samarium-cobalt or AINiCo magnets, or magnets of other materials with high coercivity.

In a preferred embodiment, the stator is provided with a mounting shaft fixedly attached to the stator windings, ie. fixedly attached to core of the windings. In other words, the mounting shaft is connected to the coils. The mounting shaft is not adapted for following the rotational movement of the rotor. Rather, the mounting shaft is a fixed component of the inventive drive (fixedly connected to a mounting assembly), wherein the roller is rotatable vs. the mounting shaft. The mounting shaft forms a fixed shaft. In particular, the mounting shaft is indirectly attached to the stator windings (ie. to the coils). Preferably, the mounting shaft is mechanically connected with the armature, ie. an inner opening of the armature. The mounting shaft is fixedly attached to the core on which the windings are located, preferably with no degrees of freedom or at least no rotational degrees of freedom. The mounting shaft can be directly attached to the armature or is, as a preferred embodiment, attached to the armature via an elastic damper element as described below. Any dampening movement allowed by the damper element shall not be considered as a movement in the sense of a degree of freedom..

In a particular embodiment, the mounting shaft is formed of two mounting bushings, both extending at least partly within a longitudinal center bore of the core, wherein a (longitudinal) pin connects the mounting bushings. The mounting shaft extends longitudinally through the contact roller. Further, the mounting shaft comprises two attachment sections at both opposite end faces of the contact roller. Preferably, the attachment sections each project from the pertaining end faces of the contact roller. In particular, at least one of the attachment sections comprises attachment elements (e.g. bores or threaded holes) at least one of which is not located at the rotational axis of the motor. Alternatively or in combination therewith, at least one of attachment sections comprise a non-circular attachment element. In both alternatives, the attachment elements are adapted to transmit torque between the stator and a bicycle section to which the inventive drive is attached to. The mounting shaft coextending with the motor (ie. the stator) allows in particular symmetrical, stable and simple attachments to a bicycle.

In a preferred embodiment, an elastic damper element is provided between the mounting shaft and (the cores of) the coils. The elastic damper element is preferably in form of two elastic bushings arranged on the mounting bushings and the core elements. In particular, the elastic damper element is arranged between the armature, i.e. an inner opening of the armature, and the mounting shaft, which is preferably provided by mounting bushings. The elastic damper element significantly reduces the noise resulting from the operation of the motor by mechanically decoupling inner motor components (the stator) from the motor support with regard to vibrations (in particular in the audible range).

The damper element is provided at the mounting assembly at the top part. Thus, the damper element is arranged between (most components of) the mounting assembly and the bicycle provided with the inventive drive. The damper element can be provided at the beams, at the arms (in particular at the pivoting point, wherein the damper element can form a support for a pivoting bearing connecting the arms and the mounting shaft of the motor. Thus, the damper element can be provided within components of the mounting assembly connecting the top part and the stator. Further, the damper element can be provided within the mounting shaft. The damper element is of elastic material or is an elastic construction adapted to absorb vibrations. The damper element can be sheet or a pad of elastic material like rubber.

According to an aspect of the invention, the electric drive is provided with a first and a second rolling-element bearing. The bearings support the roller vs. the stator or the mounting shaft. The bearings are located at distinct longitudinal positions of the drive, ie. at opposite ends of the roller. The bearings connect the mounting shaft and the contact roller, however with a rotational degree of freedom. The bearings are at opposite longitudinal positions of the mounting shaft. The bearings can be roller bearings, ball bearings or needle bearings. The rotating elements (as well as the surface contacted thereby) can be made of steel, hardened steel, surface treated steel or any combinations thereof. Further, the rotation elements (as well as the surface contacted thereby) can be made of ceramics or can comprise a surface layer of ceramics, in particular comprising Si₃N₄ or Zr0₂. The first and the second bearing, ie. both bearings at opposite ends of the electric drive, are preferably of the same kind. Preferably, the bearings have identical dimensions and are made of the same material. In particular, the bearings have the same dimensions, performance, load rating, radial load capacity and/or rating life. Thus, the bearings are symmetrical as regards their supporting performance or load capacity. In comparison to common brushless motors with external rotor, this embodiment provides a symmetrical load capacity. In other words, the load capacity as regards radial force is equal for both bearings. In this way, the inventive electric drive provides a high lifetime. In addition, the symmetry of most of the components allows to use highly similar or identical parts leading to reduced production costs.

In a particular embodiment, an electrical supply line (connected to the windings or coils of the stator) extends through the stator, and in particular through the mounting shaft. Thus, the stator (and in particular the mounting shaft) comprises a hollow section or an inner channel through with (a part of) the supply line extends. According to this aspect of the invention, the mounting shaft is hollow or comprises a longitudinal section, in which it is hollow. A channel is formed through which the supply line extends to the outside of the stator. The supply line extends through an end face of the mounting shaft in order to be connected with other electrical components outside the stator. The mounting shaft defines an inner channel in which an electrical supply line is located. The supply line extends through at least one of the end sections and/or end faces of the mounting shaft.

According to a first realization, the supply line is directly connected to the stator windings (i.e. connected to the coils). According to an alternative, second realization, the supply line is connected to a brushless motor control circuit located within the contact roller (e.g. within the stator, or, preferably at an end face of the mounting shaft). The brushless motor control circuit controls the stator windings (i.e. coils) connected therewith. In the first realization, the supply line is a multiphase line comprising a line for each phase (in particular in addition to a neutral conductor), e.g. a three-phase line with phases R, S, T. The stator coils (i.e. the windings thereof) are electrically grouped according to their phase. In an N phase system, N windings in sequence pertain to distinct phases. Coils, between which N-1 other coils (of other phases) are located, are connected serially or in parallel. N is an integer and equal to 3 or greater. Coils of distinct phases are arranged in a particular sequence of phases, which is repeated for all windings. The coils and their interconnection provide a rotating magnetic field when supplied with an N-phase system. Connections among the coils are located within the stator. Further, these connections or the coils (i.e. the windings thereof) comprise taps to which the multiphase line is connected. It is also possible to provide lines for each of the coils (i.e. the respective windings), wherein the mutual interconnection of the coils (and, consequently, the association to a particular phase or group or) is located outside the stator. In this case, the supply line is formed by lines leading to the individual windings. In the second realization, the supply line preferably comprises two supply conductors, eg. DC conductors providing V+ and GND voltage. These are connected to the motor control circuit. At least one further line (also connected to the motor control circuit) in addition to the supply lines transmits control data (e.g. revolving speed data or power data or torque data as set point data) and/or sensor data (e.g. temperature data or load data provided by the motor or sensors at the motor). In preferred embodiments, the supply line extending through the mounting shaft is a three-phase line (with three phase conductors or three phase conductors and an additional neutral conductor) connected to the windings, which are connected in groups, ie. according to the phase system. In these preferred embodiments, the motor control circuit is located outside the mounting shaft and the stator but is a component of the electric drive, preferably located within a mounting assembly of the electric drive. The motor control circuit comprises a brushless motor controller (as an integrated circuit) and output stage switches (as electronic switches) driven thereby. Generally, the electrical features and properties of the coils apply for the windings of the respective coils.

The motor control circuit can be provided with a sensor input or a sensor for sensing the magnetic field orientation within the motor or the orientation of the rotor vs. the stator. The magnetic field orientation is provided as input to the controller for field oriented control (with or without field sensor). Alternatively, the motor control circuit can provide a sensorless control. In particular, the control provided thereby is a commutation control. The motor control circuit can provide a six step block commutation, a sinusoidal commutation and/or a field oriented commutation. In particular, the electronic commutator (i.e. the control circuit) drives the coils with mutually phase-shifted trapezoid or sinusoidal currents or voltages. The driving currents or voltages have positive and negative half-cycles. The trapezoid shape comprises an increasing, a constant, and a decreasing phase step for each of the half-cycles. Thus, the trapezoid current or voltage comprises six steps for each period. In addition, the shape of the driving current of driving voltage can be any shape approximated to a sinusoidal shape. In addition, the driving voltage or driving current can, taking into account the mechanical and electric properties of the coils, the rotor magnets and the armature, be provided such that a back-EMF voltage is generated having a shape similar to the shape of the driving currents or voltages mentioned above.

The motor control circuit provides a pulse width modulation (PWM) for controlling the effective power, ie. the RMS of the motor current. The motor control circuit is adapted for trapezoidal commutation control (or any other form leading to a low high frequency component or torque ripple, eg. sinusoidal commutation control). The motor is provided as permanent magnet synchronous machine. Preferably, the armature can be wounded to produce a back-EMF in trapezoidal or sinusoidal form.

According to an aspect of the invention, the electric drive comprises a cooling surface. This cooling surface is located at an end of the outer contact surface. Preferably, the electric drive comprises two (symmetrical) cooling surfaces at both ends of the outer contact surface. The outer surface area of the contact roller comprises the contact surface arranged for contacting a wheel of the bicycle as well as at least one cooling surface. The cooling surface is arranged at a lateral end of the outer contact surface area. Preferably, the outer surface area of the contact roller comprises two cooling surfaces at the lateral ends of the contact roller. If two cooling surfaces are provided, the contact surface is arranged between the cooling surfaces. The cooling surfaces are preferably provided with circumferential grooves for increasing cooling effect. Cooling effects are provided by the cooling surface(s), i.e. by an air flow, in particular by wind created by the bicycle's movement. Additional cooling effects are provided by heat transfer from the contact surface to the wheel contacted by the contact roller.

In order to protect the interior of the drive, the electric drive further comprises at least one cover member covering the stator at one or preferably at both end faces of the stator or at one or preferably at both end faces of the contact roller. The cover members extend in a radial direction. The cover members extend between a rolling-element and the inner surface of the contact roller. The rolling-element bearings are located (directly) on the stator, preferably on the mounting shaft the stator, and the cover member(s) connects the rolling-element bearings with the inner surface of the surrounding roller. The inner surfaces of the rolling-element bearings are fitted onto the mounting shaft and one of the cover members is fitted onto the outer surface of the rolling surface (rotatable vs. the inner surface of the rolling surface). The cover member(s) are fitted into the inner space of the contact roller. The cover member(s) are directly attached to the inner surface of the contact roller, preferably by press fit. Thus, the cover members, together with the rolling-element bearings provide closed outer surfaces at the end faces of the contact roller (or of the stator). In addition, the cover members, together with the rolling-element bearings, support the contact roller vs. the stator / the mounting shaft in a rotatable way. Additional cover elements can cover a gap between the inner and the outer elements of the rolling-element bearing. The rolling-element bearing can be a ball bearing or a roller bearing. Preferably, the rolling-element bearing is a shielded bearing, preferably a double shielded bearing. The rolling element is a sealed unit, wherein the only moving part abutting the outside is the outer ring of the rolling element. This enables a complete sealing of inner parts of the motor such that no dirt can enter the small gap between the stator and the rotor. Further, sealing elements can be provided at the end faces of the stator or the contact roller. The sealing elements provide a seal between the mounting shaft and roller leaving a small gap enabling the rotation of the contact roller vs. the mounting shaft (i.e. vs. the stator).

According to further aspects of the invention, the electric drive comprises a mounting assembly for mounting the electric drive to the bicycle, preferably to a kickstand recess or another kickstand mounting element at the bicycles frame located below the bottom bracket (ie. at a lower side of the bottom bracket shell) or to the chain stays, to the seat stays or to the seat tube. The mounting assembly has a top part, at which first fastening elements are provided. The first fastening elements are adapted to be attached to a kickstand recess or to another part or the bicycle's frame as mentioned above. In general, the first fastening elements are provided to be mounted to an attachment component of the bicycle. In a particular embodiment, the first fastening elements comprise a surface, which is complementary to (a section of) the kickstand recess. Preferably, the top part is adapted to be attached to a kickstand recess and comprises a screw-on plate of about 62 x 30 mm (length x width) or of 56 x 33 mm (length x width) ± 5%, 2% or 1%. The top part is dimensioned to be received within the kickstand recess or to be attached to a mounting element of the bicycle's frame below the bottom bracket shell. The top part of the mounting assembly of the electric drive is complementary to the bottom bracket shell. Depending on the size of mounting element provided by the bicycle's frame, the top part can also have a size of 53 x 26 mm (length x width), 53 x 14 mm (length x width), 62 x 30 mm (length x width), 60 x 44 mm (length x width), 29 x 10 mm (length x width), 60 x 31 mm (length x width), 58 x 31 (length x widths 5%, 2% or 1 %. Further, the top part can be provided with a bore or a slot hole enabling a distance adjustment of the assembly to the bicycle tire. The slot hole has preferably a diameter or width, respectively, of 10 mm ± 5%, 2% or 1%, preferably about 10.5 mm. Alternatively, the top part comprises a stud extending from the top part. The stud is provided with an outer screw thread having a diameter of 10 mm 5%, 2% or 1%, preferably about 10.5 mm. Alternatively, the outer screw head has diameter of 4, 6, or 8 mm (± 5%, 2% or 1 %), wherein a single stud or a plurality of studs (in particular two studs) can be provided. In addition, mounting elements for symmetrically mounting the top part to the chain stays (seat stays or seat tube) can be provided, which are attached to the top part. The top part can be provided as top plate, preferably perpendicular to beams extending therefrom.

In an alternative embodiment, the top part of the mounting assembly comprises a bracket fastener adapted to provide a mechanical connection to both chain stays of a bicycle frame, in particular to the end section of chain stays abutting to a bottom bracket of a bicycle frame. The bracket fastener comprises two brackets connected by a threaded element. The threaded element (e.g. a screw engaged in a threaded bolt) is adapted to vary the distance between the brackets of the fastener, thereby clamping the chain stays between the brackets of the fastener. Preferably, the brackets comprise convex sections adapted to receive an upper part and a lower part, respectively, of the chain stays. Each of the brackets comprises two convex sections the ends of the brackets, wherein the convex sections of each bracket are spaced apart by ca. 60 mm ± 20%, 10% or 5% (center to center). The convex section comprises a curvature with a radius of at least 15 mm, 20 mm or 25 mm. The shape convex section is adapted to the shape of the chain stays to which they are connected. The threaded element has a length of at least 15 or 20 mm in order to accommodate the diameter of the chain stays between the threaded element.

In a particular embodiment, the top part of the mounting assembly further comprises a fastening component adapted to engage with a bridging tube connecting the chain stays close (i.e. at a distance of 30 - 60 mm) to the bottom bracket. This fastening component can be provided by (at least one of) the brackets or by an additional element (e.g. a bracket). Most of common bicycle frames comprise such a bridging tube (perpendicular to the chain stays) for stability reasons. The bridging tube, the end section of the chain stays and the bottom bracket form a (small) frame. The top part of the mounting assembly comprises fastening elements arranged to be mounted to this frame.

In a preferred embodiment, the first fastening elements comprise an elastic element, eg. made of rubber, silicone or a similar, elastic material. The elastic element is mounted as a washer, ie. between the remaining parts of the drive and the bicycle. The elastic element is arranged to reduce vibrations of the inventive drive. The elastic element is in form of a layer of elastic material, in particular caoutchouc or silicone or a foamed elastic material.

According to a further aspect of the invention concerning the mounting assembly of the electric drive, the mounting assembly comprises one or more pivot points preferable located at two side beams extending from two parallel edges of the top part. Thus, the two side beams and the top part in between can be in the U-shape or in another shape, in which the top part connects the two side beams and wherein at least a section of the top part is perpendicular to a mounting section of the side beams at which the mounting shaft is attached. The second fastening elements comprise two arms, which are pivotally connected to the pivot points of the side beams at first ends of the arms (preferably by a pivoting bearing for each of the pivot points). The arms are pivotable with regard to the pivot points. A second end of the arm is connected to the stator. The second ends of the arms are opposite to the first ends. The side beams are separated from each other providing a space adapted to accommodate length of the contact roller. The side beams are connected by the top part at ends of the side beams opposite to the ends of the side beams connected to the arms supporting the mounting shaft.

The arms are biased in order to press the contact roller against the wheel driven by the electric drive. The force (in particular the component generating the force, a tension element) is preferably controllable. The second fastening elements comprise a tension element connecting one of the second ends of the arms or the stator to one of the side plates. In this way, a force provided by the second fastening elements is exerted onto the contacting roller. The tension element is located between side beams plates and stator of the contacting roller and provides a pressing force or, preferably, a pulling force. The tension element connects one of the second ends of the arms (or the stator / the mounting shaft) and a location of one of the side plates, which is closer to the first fastening element than the first ends of the arm. Alternatively, a tension element can be provided for each of the arms allowing a symmetric support of the contact roller or any other place. The tension element exerts a resilient force to the stator or to the second ends of the arms towards the side plate to which the tension element is connected.

The tension element is biased in order to provide a bias force or bias torque pressing / drawing the roller away from the mounting assembly (towards driven wheel). The tension element is adapted to provide a certain bias force at a position at which the roller contacts the driven wheel (i.e. the contact position). The bias force is adapted to the static friction coefficient of the outer contact surface of the roller and the surface of the wheel driven thereby. The bias force moving the roller towards the wheel is provided by the force provided by the tension element, a point of application of the spring force generated by the tension element (i.e. effective lever length), and contacting angle of the roller vs. the wheel's surface defined by the direction of the contacting force. Preferably, the bias force (or the spring force) can be adjusted according to the friction coefficient between wheel and contact roller, in particular according to a current road condition (dry / wet / dusty). An actuation element can be provided in order to adjust the bias force, e.g. a lever connected to the inventive drive via a Bowden cable (or an electromechanical equivalent). Such a mechanism comprising a tension element and a control is also described in detail below.

With increased (decreased) driving torque and in particular with increased (decreased) tangential force exerted by the contact roller onto the wheel, the contacting force by which the contact roller is urged against the wheel driven thereby is increased (decreased). The strictly increasing monotonic dependency between driving torque and contacting force (= normal force) urging the contact roller against the wheel (i.e. in a direction away from the mounting assembly) results from the fact that the roller is urged towards the wheel in opposite direction to the (tangential) driving force exerted by the contact roller onto the wheel due to the motor's torque. The dependency ( in the first order of magnitude is) is roughly a linear dependency, wherein the offset of the linear dependency (concerning the pressing force) corresponds to the bias force and the slope of the linear dependency is defined by the orientation of the contact roller vs. the pivoting point at which the arms holding the contact roller are supported by the side beam(s). In particular, the slope is r ^{*} t / n, r being the radius of the contact roller, t being the distance between pivoting point of the arms and tangential of the roller at the contact point and n being the tangential offset between pivoting point of the arms holding the roller and the contacting point of the roller, i.e. the distance between contacting point and pivoting point in direction of the tangential. The definition of n refers to a tangential offset at the contacting point (i.e. the tangent of roller or wheel at the contacting point) vs. the pivoting point of the arms at the side beam(s). The contacting point of the roller is the point (= cross sectional view of a contacting line) at which roller and wheel are in physical contact. Distance n reflects the tilting angle between (the arms of) the mounting assembly relative to the direction of the contacting force, wherein n corresponds to a side of a right triangle (reflecting the orientation of the arms) opposite to the angle.

The slope of this dependency can be provided according to a (given) static friction coefficient reflecting a proportional dependency between contacting force (normal force) and resulting maximum tangential force. The maximum tangential force resulting from the static friction element is greater than the tangential force exerted by the contact roller for all driving torques realizable by the motor. This avoids slipping.

In particular, at least one of the physical quantities of r, t and n defining dimensions of the inventive drive can be provided according to the surface properties of the roller and the wheel (under certain standard conditions) and the resulting friction coefficient. Further, for example t or n can be adapted according to current street conditions, i.e. according to the current friction coefficient, e.g. by an adaptation mechanism, e.g. comprising a lever, a Bowden cable an electro mechanic actuator. Further, different supporting points at the beam(s) can be provided in order to allow distinct pivoting points for the arm. By providing distinct pivoting points (at least two) for the arms supporting the contact roller, distinct t or n sizes can be provided. In the same way, distinct application points for the tension element at the arms or distinct anchor points for the tension element at the beams can be provided. The anchor point to which the tension element is connected is the application point. Particular points of the supporting points (providing the pivoting point), application points and/or the anchor points can be selected in order to select a certain t and/or s. For distinct points, t and/or s are distinct. This allows to define and select a certain desired dependency between contacting force and driving torque, in particular depending on a current friction coefficient resulting from actual street conditions. An adapted orientation (resulting in an adapted dependency between contacting force and driving torque) can be provided by distinct discrete orientations of the roller vs. wheel, ie. by the pivoting points, application points and anchor points. Further, such an adaptation can be provided by a continuously adaptable orientation, e.g. provided by a mechanism comprising an adjusting screw or a setscrew in order to adapt at least one of t or s. Such a mechanism is provided by the mounting assembly.

The tension element presses or pulls the stator (ie. the mounting shaft / the roller) into the direction which is creating preload normal force pressing the roller against the wheel, corresponding to the bias of the contacting force discussed above. In addition to the constant preload (bias), the drive torque provided by the roller increases mechanically the force pressing the roller against the wheel, according to the relationship mentioned above. A stronger torque results in stronger pressing force, according to the linear relationship denoted above. So in lower torque cruise mode the overall system efficiency is increased compared to a fixed pressing force set up. The contact force is sufficient to avoid slip but does not lead to unnecessary deformation of the wheel by the contact roller, which would significantly reduce the efficiency otherwise. In particular, this allows to reduce additional flexing of the wheel to a minimum.

The arms holding the contact roller have length of preferably 35 - 100 mm, measured from the pivoting point and the contact roller's axis, i.e. the connection point of arms and mounting shaft. The mounting assembly is adapted to define an inclination of the arms of preferably 45 - 10°, in particular 32 - 20°. The inclination is given by an angle between swing arm (line between pivoting point and the contact roller's axis) and the line between bicycle wheel and pivoting point. The inclination is given for the case that the roller is in contact with the tire driven thereby.

In a further embodiment, the drive comprises a stopper or abutment limiting the movement of the roller in a direction away from the mounting assembly. The stopper is provided at the mounting assembly, in particular at one of the beams. The stopper is arranged in the range of the arms in order to engage with the arms at a predefined end position provided by the stopper. The predefined end position is defined by the spatial orientation of the stopper with regard to the arms. If the arms are located at the end position, the roller is at a contacting position with the wheel.

The tension element can be provided by a spring, a Bowden cable, a servo motor, a solenoid, a pneumatic or hydraulic element or a combination thereof. The Bowden cable is preferably connected with an actuation element like a lever for manual actuation. Further, a control connected with the tension element can be provided, eg. a mechanical control (eg. a bowden cable) or an electrical control. Further, the tension element can be connected to the respective arm / to the second fastening element. In addition, a mechanical or electrical actuation element can be provided, which is connected to the second fastening element. In particular, the mechanical actuation element can be a lever adapted to be actuated manually. Further, latching means can be provided, preferably connected to the actuation element. In a particular embodiment, a lever for manual actuation is combined with latching means, both controlling an elastic tension element at the second fastening element. The lever is adapted to adjust the degree of compression of the tension element, ie. to control the force generated by the tension element. The tension element exerts a force on the arm pressing (or pulling) the contact roller towards a bicycle's wheel (e.g. in an engagement mode). The latching element maintains the degree of compression of the tension element is the actuation element is not actuated any longer. Further, the actuation element is adapted to release the latching element. Preferably, an additional spring moves the contact roller back from the wheel, if the latching element is released, e.g. in a disengagement mode.

The control is adapted to control the orientation of the arms providing an engagement mode and a disengagement mode. In engagement mode, a force directing away from the mounting assembly provided by the tension element is exerted onto the arms. This moves the contact roller towards a wheel of a bicycle at which the drive is mounted. In disengagement mode, the tension element or the control places the contact roller towards the mounting assembly. Further, the actuation element can place the contact roller towards the mounting assembly, i.e. away from a wheel of a bicycle at which the drive is mounted. The contact roller is moved by changing the orientation of the arms with regard to the mounting assembly (i.e. with regard to the beams).

In a particular embodiment, the second fastening elements comprise guide rails supporting the stator (ie. the mounting shaft), wherein a tension element presses the mounting shaft in a direction away from the mounting assembly (and towards the wheel). The tension element can comprise a centrifugal force converter adapted to convert a part of the rotational power of the motor into a longitudinal force pressing the stator (or the arms) away from the mounting assembly and towards the wheel. The centrifugal force converter can be provided as rotating pendulum masses and an axial guidance moved by the centrifugal force of the masses. In this way, a mechanical adjustment element is provided allowing to control the contacting force (ie. the force exerted onto the contact roller pressing the roller onto the wheel and away from the mounting assembly, also referred to as normal force). In general, the mounting assembly can comprise a removing unit for removing the contact roller from the wheel, if no electrical support is desired. Such a removing unit can be provided by the tension element and can be provided electromechanically (a servo motor or a solenoid) or mechanically (as centrifugal force converter). The removing unit and the tension element controlling the contacting force can be provided by the same mechanical or electromechanical element, e.g. a servo drive.

In addition the tension elements can be controlled the rotating speed of the motor or by the mechanical output power of the motor or by the torque provided by the motor. Alternatively, the tension elements can be controlled using 2 sensors detecting the speed difference of the roller and the bicycle wheel, i.e. a slip between drive and wheel. A control connected thereto can be provided adapted to increase the contacting force if a slip is detected.

An adjustment element is adapted to control the force generated by the tension element depending from the rotating speed, the mechanical output power or the torque. With increased rotating speed, mechanical output power or torque, the adjustment element increases the force generated by the tension element. The force is exerted on the contact roller moving the contact roller from the mounting assembly, ie. towards the wheel. The adjustment element can be provided by an electronic circuit connected to the motor or motor control circuit. The adjustment element comprises an output port connected to a tension element, or in particular to a servo motor pressing the contact roller from the mounting assembly according to the rotating speed, mechanical output power or torque of the motor.

According to a particular embodiment of the inventive electric drive the mounting assembly comprises a snap fit connecting the top part to a base adapted to be fixedly attached to the bicycle, preferably at a position adapted for mounting a kickstand. The snap fit comprised a quick release element. The quick release element is adapted to release the connection provided by the snap fit upon actuation. The mounting assembly comprises a stopper, a guidance, or both. The stopper and the guidance are adapted to position the top part relative to the bicycle. The stopper or the guidance, respectively, provide a snap-in position for the top part or for a guidance element fixedly attached to the top part. This allows simple removal and insertion of the remaining electric drive to this part of the mounting assembly.

Further aspects of the inventive electric drive relate to controlling elements for driving the motor. The electric drive comprises a brushless motor controller and output stage switches connected therewith. A control input of output stage switches is connected to an output of the controller. A power input of the output stage switches is connected with an electrical power source (in particular an accumulator or a battery pack) or is connected to a power supply input port (forming a part of the electric drive). The electrical power source can be a part of the inventive drive and can comprise a snap-in connection adapted to engage with a snap-in connection mounted at the bicycle. The power source can be housed within the mounting assembly. The controller and the output stage switches form a brushless motor control circuit. The output stage switches (in particular an output thereof) are coupled with the stator coils, i.e. windings. The output stage switches or the output stage switches as well as the brushless motor controller are housed within the mounting assembly, in particular between the side walls. The output stage switches are semiconductor switches (FETs, MOSFETs, GTOs, IGBTs or MCTs), bipolar transistors being in thermal connection with the mounting assembly. A power switch for turning on and deactivating the complete drive can be provided, eg. in form of an electric or electronic switch or a electromechanical relay. Further, a main switch for turning on and deactivating the motor can be provided which is arranged to be actuated when the contact roller contacts the wheel and is not actuated when the contact roller is not in contact with the wheel or vice versa. The main switch can be located in the housing or in a manual control of the tension element. Preferably, the main switch is located at a manual actuation lever of a Bowden cable controlling the position of the contact roller. In particular, the main switch is a sealed switch, e.g. a magnetic switch actuated by a permanent magnet the presence of which controls the state of the main switch.

The brushless motor control circuit is provided as electronic power converter or commutator. The brushless motor control circuit (in particular the brushless motor controller) comprises an input port for controlling the rotational speed, the mechanical output power and/or the output torque. Providing at least a part of the electronic components outside the stator (outside the contact roller) increases the compactness of the motor and allows to cool the electronic components (in particular the output stage) via mounting assembly without warming the contact roller or the stator.

A further aspect of the invention is the direct connection between motor and wheel without using a gear. In this regard, the motor (number of windings per coil, arrangement and number of coils, control, nominal rotational speed, characteristic diagram of output power, efficiency, or torque vs. rotational speed) as well as the contact roller are dimensioned to allow driving speeds of at least 10, 20 or 25 km/h (or even 30 km/h). Since the contact roller directly drives the wheel of the bicycle, the circumferential rotational speed of the contact roller is identical to circumferential rotational speed of the wheel driven thereby and is identical to the driving speed of the bicycle. In addition, the electric drive (and in particular the contact roller) is dimensioned to fit below the bottom bracket or below the chain stays without significantly decreasing the ground clearance when mounted at a bicycle. In a preferred embodiment, the height of electric drive / of the contact roller is not greater than the radius of a common front chain wheel of a bicycle. According to this aspect of the invention, the outer diameter of the contact roller is 30 - 80 mm, 40 - 60 mm or 45 - 55 mm. In the most preferred embodiment, the diameter is ca. 50 mm. The contact roller or the drive, respectively, is provided in a width significantly smaller than the lateral distance between the pedal cranks. In particular, the width of the inventive drive does not exceed the width of the bottom bracket case. The width of the bottom bracket case is about 60 - 80 mm, preferably about 70 mm, 72 mm or 80 - 85 mm, depending on the manufacturer. The motor and the roller are arranged to provide a rotational speed of 6.5 - 7 m/s of the outer surface (called circumferential speed) at an efficiency, which is at least 70%, 80 %, 90 % or 95 % of the maximum efficiency. This speed is provided at a nominal driving voltage corresponding to a nominal voltage of an electric energy source, e.g. an battery pack. The nominal voltage can be 7.2 V, 12 V, 24 V, 36 V, 48 V or similar. The maximum efficiency of the motor occurs at a rotational speed below 6.5 - 7 m/s of the outer surface, such that 6.5 - 7 m/s is beyond the speed linked with the maximum efficiency. The diameter D of the contact roller in millimeters and the maximum allowable rotational speed in revolutions per minute N of the motor is preferably according to π * D * N = 22 ... 35, 24 ... 32, or 25 ... 30 km/h. The maximum allowable rotational speed in revolutions per minute N of the motor is defined by the mechanical rating. An additional (electronic) speed control can be provided limiting the maximal speed x ^{*} D ^{*} N on 25 km/h, 30 km/h, 35 km/h or any other legal speed limit.

A particular embodiment of the invention comprises a roller diameter of 50 mm (+-10,%, 25%, 50%). The particular embodiment of the motor preferably comprises 14 poles and 12 grooves/teeth with each is loaded with a coil of 20-34 windings in delta configuration (an equivalent star configuration of 11-20 windings can also be used). This particular embodiment of motor design (stator / rotor design) provides a maximum allowable rotational speed of ca. 26 (or 35 or 45) km/h (mechanical rating) and/or a maximum efficiency at a speed of 20 - 22 km/h. Beyond this maximum allowable rotational speed, the output power decreases rapidly, thus forming a speed limitation. The motor design inherently linked with this dependency of speed and efficiency is adapted to a speed limit of electric bicycles or pedelecs set by the local law. The motor can comprise 10, 12, 14 or 16 coils and respective 12, 14, 16, 10 magnet poles. Each coil comprises a plurality of windings, eg. 20 - 40, 24 - 34 or about 34 windings.

In addition to the motor design power & speed limits invention preferably comprises a control unit which deactivates or reduces the power of the electric drive at speeds greater than a certain speed. In a preferred case it is 25 km/h corresponding to the legal speed limit in this case of Europe. This can be dimensioned to any other speed to comply with any law.

In addition, the invention further can comprise a temperature sensor close to the motor stator, a torque sensor at the motor and/or speed sensor at the contact roller or adapted to be arranged at the bicycle, which are connected to a control unit. For the temperature sensor and the torque sensor, maximum values are provided. If the temperature sensed by the temperature sensor or the torque sensed by the torque sensor exceeds the respective value, the control unit (connectable to the sensors) is adapted to deactivate the electric drive (and, in addition, to remove the contact roller from the wheel).

According to a further aspect oft he invention, the electric drive can be used as generator, in particular for transforming kinetic energy of the bicycle into electrical energy. This regenerated energy can be stored in an accumulator, which is used as storage for traction energy or can be used for other electric or electronic elements of the bicycle (eg. a control lighting or for charging any other device, eg. mobile phone, gps device, music player, computer etc...).

In an embodiment of the invention, the mounting assembly comprises an energy source mounting element for mechanically connecting an accumulator assembly, i.e. a battery pack. In other embodiments, the accumulator assembly is attached to the mounting assembly by the battery mounting element. The energy source mounting element preferably comprises a releasable snap-in element, wherein the energy source (battery pack) comprises a complementary snap-in element.

The electric drive can be used for bicycles, scooters, tricycles, wheelchairs or any other wheel based vehicle or even in other applications to drive another rotating part (e.g. a washing machine drum).

The inventive drive can be provided with a key switch, i.e. a user input unit, which allows to set a speed limit or a power limit within the control of the motor. The key switch comprises at least a off-road position for speeds above a speed limit, a public traffic position in which the legal speed limit is activated, and a low speed position, pin which a selectable or definable speed limit below a legal speed limit or a power limit below a nominal power can be set (e.g. for controlling the maximum speed of non-adult drivers) in providing a parental control.

### Brief Description of the Drawings

Figure 1 shows an application of an embodiment of the present invention.
Figure 2 shows an electric motor and a contact roller of an embodiment of the present invention in exploded view.
Figure 3 an embodiment of the inventive drive in side view.

### Detailed Description of the Drawings

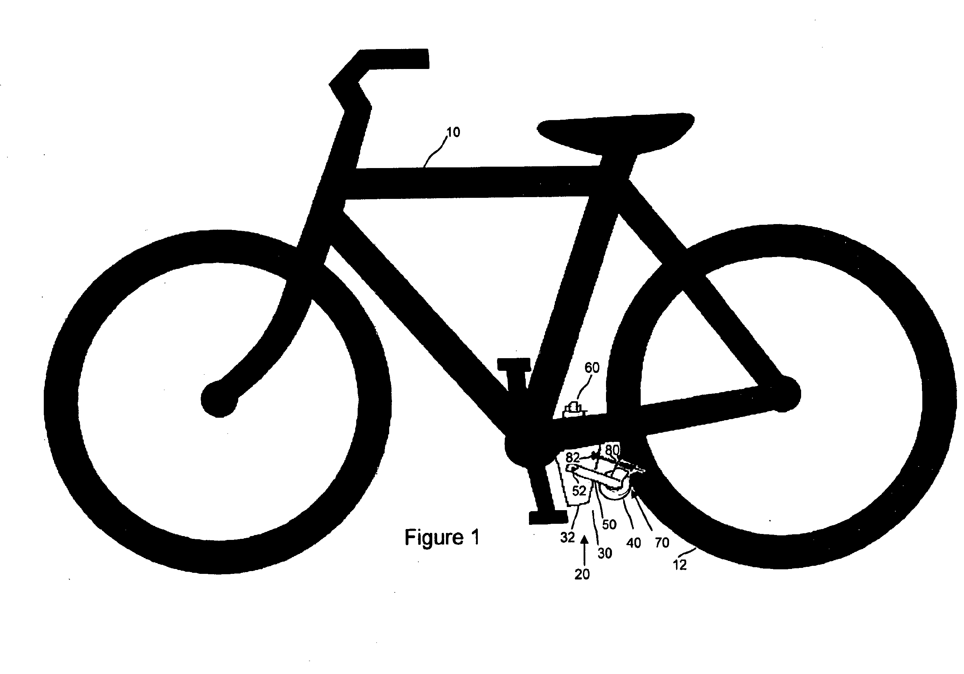

Figure 1 shows an application of the inventive electric drive, wherein the electric drive 20 is mounted at a bicycle 10. The drive 20 comprises a mounting assembly 30 as well as a roller 40 connected thereto via arms 50. The arms 50 are pivotably connected to beams 32 of the mounting assembly at a pivot point 52 of the beams 32. The mounting assembly further comprises a top part having first fastening elements 60. The fastening elements 60 are mounted to an attachment component of the bicycle adapted for mounting a kickstand thereto. Such an attachment component can be a kickstand recess or a plate having a mounting hole. Alternatively, the attachment component of the bicycle to which the first fastening elements 60 can be mounted can be provided by chain stays. As a further alternative, the attachment component of the bicycle to which the first fastening elements can be mounted are seat stays or a seat tube of the bicycle (not shown). In Figure 1, the first fastening elements 60 comprise a stud with an outer screw thread extending through a corresponding attachment component (e.g. the place between chain stays or a bore within a kickstand mounting plate) of the bicycle.

The arms 50 are connected to a mounting shaft of the motor encompassed by the contact roller 40. The mounting shaft is fixedly attached to the arms 50 as regards rotational movements, in order to generate a driving force at a contact point 70. At contact point 70, the contact roller 40 contacts the back wheel 12 of the bicycle 10. Further, the mounting shaft is fixedly attached to the arms 50 as regards translational movements, in order to generate a normal force urging the contact roller 40 towards the wheel 12, i.e. away from the mounting assembly. The normal force is generated by a tension element, which is realized as spring assembly 80 in the embodiment shown in Figure 1. The tension element 80 is attached to one of the beams 32 at an anchor point 82 of the beams 32. The anchor point 82 is displaced with regard to the pivot point in order to allow an urging force of the contact roller 40 in a tangential direction of the arms 50.

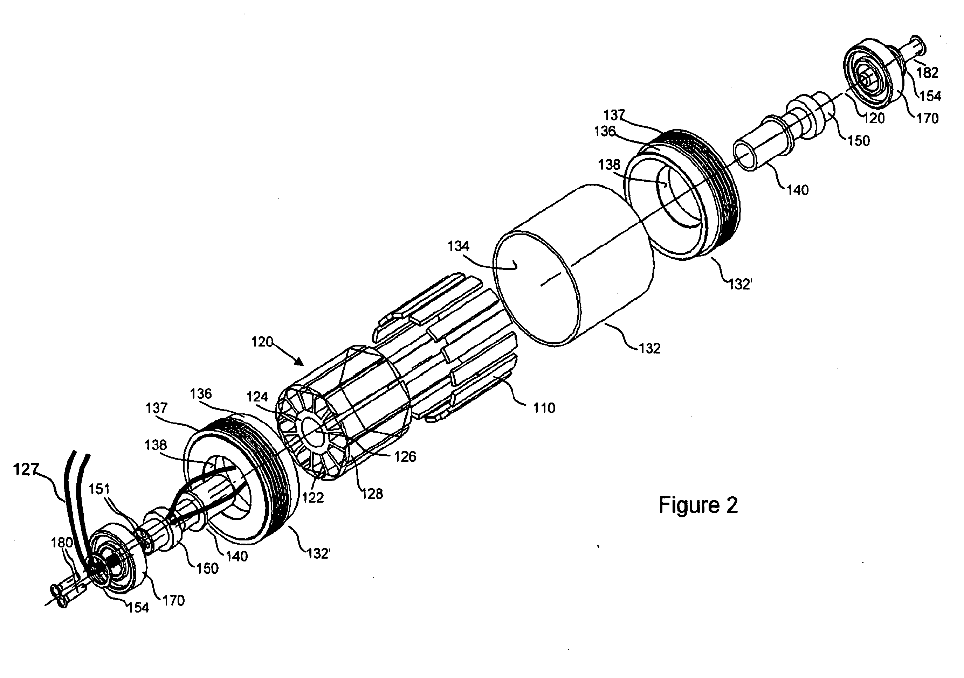

Figure 2 shows an electric motor and a contact roller of an embodiment of the present invention in exploded view. The contact roller 132, 132' (corresponding to contact roller 32 of Figure 1) encloses most of the parts of the motor, in particular all parts apart from lateral attachment components. The motor comprises a plurality of magnetic rotor elements 110 which are circumferentially arranged within an inner surface 134 of the contact roller and attached thereto. The magnetic rotor elements 110 extend parallel to the axis of the motor and are in the shape of a bar. The contact roller comprises an element in the shape of a hollow cylinder 132 with a cylindrical cross section. This cylindrical body 132 is of a magnetically permeable material for providing a magnetic loop connection. The magnetic rotor elements 110 are equidistant. The magnetic rotor elements are permanent magnets and are made of magnetic material with a high coercivity. The cylindrical body 132 is of magnetic material with a high permeability, e.g. a ferromagnetic material, Mu-metal, permalloy, ferrite or similar or comprises at least such material. The magnetic material forms the inner surface 134 of the contact roller. Corresponding to the magnetic rotor elements 110, an armature 120 as a part of the stator is provided, wherein the armature is made of a magnetically permeable material. The armature comprises core elements 122 and magnetic material 124, which magnetically connects the core elements 122. The magnetic material provides an inner bore 126 for attaching the armature to further components of the motor. The windings of the coils (not shown for clarity reasons) encompass the core elements. The electrical supply lines of the motor 127 (just an example is shown for clarity reasons) passing through the hollow mounting shaft 150 and the bearing 170. The armature further comprises outer pole areas 128 oriented towards the magnetic rotor elements. In order to avoid the transmission of vibrations, two damper elements 130 are provided, which are arranged within the inner bore 126 of the armature, wherein the damper elements 130 are introduced from opposite sides into the inner bore 126 of the armature 120. At least one of the damper elements 140 are hollow in order to provide a channel for electrical connections to the coils arranged on the armature 120. Further, the damper elements 140 are in the shape of a bushing in order to partially receive mounting bushings 150. The damper elements 140 and the mounting bushings 150 can be referred to as mounting shaft. Electrical connections between the coils and the exterior of motor (not shown for clarity reasons) extend through the mounting shaft, i.e. through the at least one of the damper elements 140 and least one of the mounting bushings 150. In addition, the inner bore of the armature 120, at least one of the mounting bushing, or one of the damper elements can be provided with radial bores through which the electrical connections extend.

The contact roller further comprises two end caps 132' which are laterally engaged with the cylindrical body 132 from both sides of the cylindrical body. Each end cap 132' provides an outer circumferential shoulder area 136 which receives an end of the cylindrical body 132. The outer circumferential shoulder area 136 is connected to lateral end sections of the inner surface 134 of the cylindrical body 132, preferably by press fit. Further, each end cap 132' provides an inner circumferential shoulder area 138 connected to one of the mounting bushings 150 via one of the damper elements 140. The outer circumferential surface of the end caps 132' comprises circumferential groves 137 for increased surface area resulting in an increased cooling effect. The end caps 132' and the cylindrical body 132 are preferably of the same material.

The inventive drive further comprises rolling element bearings 170, each rolling element bearing supporting one of the mounting bushings 150. Inner sides of the rolling element bearings 170 contact the mounting bushings 150 and outer sides of the rolling element bearings 170 contacts the contact roller. In particular, the outer sides of the rolling element bearings 170 contact the inner circumferential shoulder areas 138 of the end caps 132' of the contact roller.

Axially extending fixing elements 151 are provided within the mounting bushings 150, which are offset to the axis 120. The axially extending fixing elements 151 are threaded bores receiving screws 180 which allow to attach the mounting shaft (in particular: the mounting bushings 150) to a mounting assembly (not shown). Due to the offset, the stator can not rotate relative to the component of the mounting assembly, which directly contacts the mounting bushing. Further, an axial fixing element 182 extending along the axis 120 is provided for attaching the roller and the motor to a mounting assembly. Sealing elements 154 are provided to cover a gap between inner and outer elements of the rolling element bearing, in which the balls or the cylinders of the rolling element bearing are provided.

Preferably, all elements in Figure 2, apart from the screws 180 and the axial fixing element 182, are permanently attached to each other, for example by press fit.

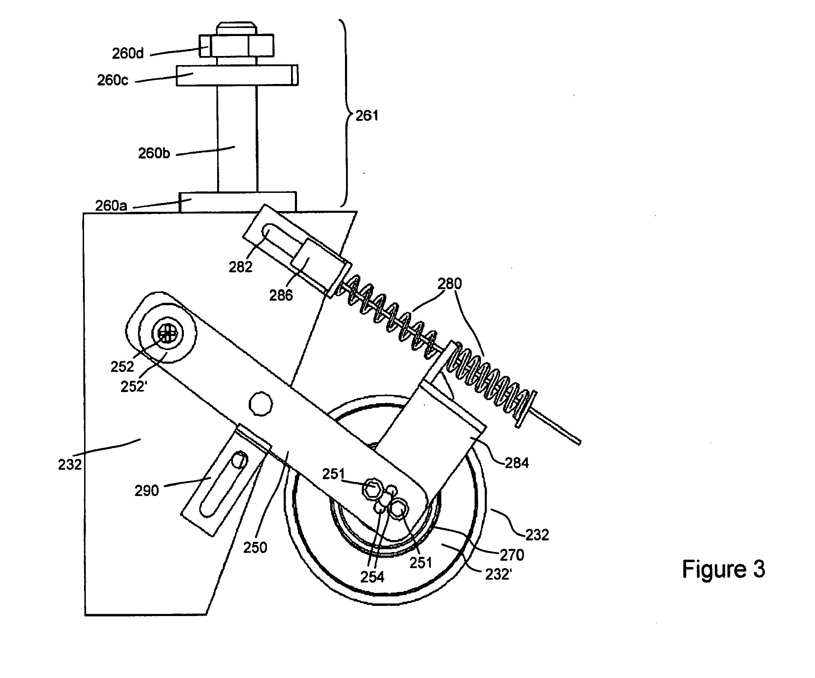

In Figure 3, an embodiment of the inventive drive is shown in side view. The embodiment of Figure 3 comprises a motor and a contact roller similar to the embodiment depicted in Figure 2. In addition, the drive shown in Figure 3 is similar to the drive shown in Figure 1.

The electric drive shown in Figure 3 comprises a contact roller 232 (similar to contact roller 132, 132' of Figure 2). An end cap 232' extends between the inner surface of the contact roller 232 and an outer side of a rolling element bearing 270. The rolling element bearing 270 is seated on a mounting shaft (in particular: on a mounting bushing). Fixing elements 251 in form of screws attach the mounting shaft to an arm 250. In an alternative embodiment (not shown), only one fixing element radially dislocated to the axis of the mounting shaft / of the mounting bushings is provided. In Figure 3, the drive comprises two arms, one each at one of the axial ends of the motor / roller, wherein Figure 3 shows only one of these arms due to the side view representation. The arms are part of a mounting assembly. Arm 250 (as well as the other arm, not shown) has a first end at which it is pivotably connected to a pivot point of a side beam 232 of the mounting assembly. Due to the side view representation, only one side beam of two side beams 232 are shown. At the first end, the arm 250 (as well as the other arm, not shown) is connected to the beam 232 via a pivoting bearing 252'. The pivoting bearing 252' is connected to a pivot point 252 of the beam 232. The arm 250 (as well as the other arm) further comprises a second end opposite to the first end at which the arm 250 is connected to the stator (or mounting shaft) of the motor via the fixing elements 251. At the second end of the arm 251, though holes 254 are provided through which electrical connections (not shown) to the stator coils (not shown) extend.

The arm further comprises a stopper (or abutment) 290 having a slot into which a pin connected to the beam engages. The dimensions of the slot define the movement range of the arm 250.

Further, the mounting assembly shown in Figure 3 comprises a tension element in form of a spring assembly 280, which connects an anchor point 282 of the beam 232 with a lever 284. The lever 284 is attached to the arm 250, in particular to the second end of the arm 250, at which also the mounting shaft of the motor is attached to the arm 250. The lever 284 is inclined to the arm 250, in particular with an angle of about 90°. The lever 284 provides an offset perpendicular to the direction into which the arm extends. This allows to create a normal force urging the contact roller from the mounting assembly (i.e. from the beams 232) as a result of the force provided by the spring assembly. At the anchor point, a set screw 286 is provided in order to set and adjust the bias tension provided by the tension element. Instead of a set screw, a plurality of discrete connection points could be provided in order to select the bias tension according to the location of the selected set point. Further, a plurality of anchor points can be provided, the selection of which defines the characteristic curve of normal pressure and inclination of the arm 250. In addition, the effective length of lever 284 allows to adjust the characteristic curve. Thus, the point of connection between spring assembly 280 and lever 284 could be a selectable point, e.g. by providing a plurality of such points at the lever 284, wherein one selected of which is connected to the spring assembly 280. A plurality of points can be provided by a sequence of wholes or projecting engagement elements. In general, either the point at which the tension element 280 exerts its force on the arm 250 is distinct to the axis of the roller 232 or the anchor point 282 is distinct to the pivot point 252 or both. This allows the tension element to create a force in a tangential direction of the arm with regard to the pivot point 252. The orientation between pivot point 252 and anchor point 282 as well as the orientation of the lever 284 defines a bias normal force as well as an increase rate, wherein the bias normal force is adjusted according the friction coefficient between contact roller and wheel, and wherein the increase rate defines the increase of the normal force as a function of the driving torque delivered by the drive to the wheel. The increase rate as well as the bias normal force are adjusted such that, at maximum driving torque, the resulting normal force is higher than a minimum force below which slip between the contact roller and the wheel occurs. The minimum force depends on the maximum driving torque and the friction coefficient between wheel and roller.

The mounting assembly further comprises a top part 261 having first fastening elements 260 a-d. These first fastening elements are a projecting plate 260a, a threaded bolt or stud 260b extending from the projecting plate 260a, a washer plate 260c through which the stud 260b extends, and a nut 260d having an inner thread engaging the outer thread of the stud 260b. The stud 260b has a length allowing to extend through a complementary attachment component at a bicycle frame, wherein the nut 260d and the washer 260c are adapted to mount the first fastening elements to the complementary attachment component of a bicycle frame. A damper element can be provided as a pad or sheet of elastic material below the washer plate 260c, above the projecting plate 260a, or a combination thereof. Such a damper element can be combined with damper elements at the mounting shaft (i.e. at the stator). In addition a damper element can be provided at the arm 250, for example as an elastic support at the pivot point 252. In particular, the damper element can be combined with the pivot bearing 252', for example as an elastic support receiving the pivot bearing 252'.

## Claims

1. Electric drive (20) for a bicycle (10) comprising an electric motor and a contact roller (40; 132) having an outer contact surface, wherein the electric motor comprises a stator (120) having plurality of stator coils as well as corresponding magnetic rotor elements (110), the rotor elements being fixedly attached to an inner surface (134) of the contact roller (132), wherein the contact roller encloses the stator.

2. Electric drive according to claim 1, wherein the stator is provided with a mounting shaft (140, 150) fixedly attached to the stator coils, wherein the mounting shaft extends longitudinally through the contact roller (132) and comprises two attachment sections (151, 182) at opposite ends of the contact roller (132).

3. Electric drive according to claim 2, further comprising a first and a second rolling-element bearing (170) connecting the mounting shaft (140, 150) and the contact roller (132) at opposite longitudinal positions of the mounting shaft, wherein the first and the second bearing substantially having the same dimensions, performance, load rating and/or rating life.

4. Electric drive according to claim 2 or 3, wherein the mounting shaft comprises at least a longitudinal section, in which the mounting shaft (150) is hollow and defines an inner channel in which an electrical supply line (127) is located, wherein the supply line extends through at least one of the end sections of the mounting shaft and wherein the supply line is directly connected to the stator coils or windings thereof or wherein the supply line is connected to a brushless motor control circuit located within the contact roller, the brushless motor control circuit controlling the stator coils connected therewith.

5. Electric drive according to one of the preceding claims, wherein the electric drive further comprises at least one cooling surface (137) at an end of the outer contact surface having groves, wherein the electric drive further comprises at least one cover member (154) covering the stator at an end face and/or at an front face of the stator.

6. Electric drive according to one of the preceding claims, further comprising a mounting assembly adapted to be mounted to a kickstand mounting element of a bicycle frame or a mounting assembly having a top part (261), at which first fastening elements (260a-d) are provided, wherein the first fastening elements are adapted to be attached to a kickstand recess, preferably a screw-on plate of about 62 x 30 mm or of 56 x 33 mm ± 5%, 2% or 1%, or in particular a top part with a bore or a slot hole having a diameter or width, respectively of 10 mm ± 5%, 2% or 1%, or advantageously a stud (260b) extending from the mounting assembly, which is provided with an outer screw thread having a diameter of preferably 10 mm ± 5%, 2% or 1%, or a mounting assembly comprising a bracket fastener adapted to provide a mechanical connection to both chain stays of a bicycle frame, in particular to an end section of chain stays abutting to a bottom bracket of a bicycle.

7. Electric drive according to claim 6, wherein the mounting assembly further comprises two side beams (232) extending from the top part (261); wherein second fastening elements of the mounting assembly comprise two arms (250), which are pivotally connected to the side beams at first ends of the arms (250) and are connected to the stator or to the mounting shaft or to the mounting bushings at second ends of the arms opposite to the first ends, the second fastening elements further comprising a tension element (280) connecting one of the second ends of the arms or the stator to one of the side beams (232), preferably to a location (282) of one of the side beams (232), which is closer to the top part (261) than the first ends of the arm, the tension element (280) exerting a resilient force to the stator or to the second ends of the arms towards the side beam to which the tension element (280) is connected, wherein the arms (250) have a length of preferably 35 -100 mm.

8. Electric drive according to claim 7, wherein tension element (280) comprises a spring, a Bowden cable, a servo motor, a solenoid, a pneumatic or hydraulic element or a combination thereof, and wherein the electric drive preferably further comprises a control connected to the tension element, the control being a mechanical control, preferably in form of a bowden cable or being an electrical control, wherein the control is adapted to control the orientation of the arms providing an engagement mode, in which a force directing away from the mounting assembly provided by the tension element is exerted onto the arms, as well as an disengagement mode, in which the tension element or the control places the contact roller towards the mounting assembly.

9. Electric drive according to claim 6, 7 or 8, wherein the mounting assembly comprises a snap fit connecting the top part to a base of the mounting assembly adapted to be fixedly attached to the bicycle, the snap fit further comprising a quick release element, the actuation of which releases the connection provided by the snap fit, wherein the mounting assembly further comprises a stopper, a guidance or both, the stopper or the guidance, respectively, providing a snap-in position for the top part or for an guidance element attached to the top part.

10. Electric drive according to one of claims 6 - 9, wherein the motor is an electric brushless motor, the drive further comprising a brushless motor controller and output stage switches connected therewith forming a brushless motor control circuit, the output stage switches being coupled with the stator coils or windings thereof, wherein the output stage switches or the output stage switches as well as the brushless motor controller are housed within the mounting assembly and wherein the output stage switches are semiconductor switches being in thermal connection with the mounting assembly.

11. Electric drive according to one of claims 6 - 10, wherein a mechanical damper element is provided within the mounting assembly at the top part providing contact to a bicycle or wherein the damper element is provided within components of the mounting assembly connecting the top part and the stator, or wherein the damper element is provided at or within a mounting shaft (140), wherein the damper element comprises elastic material or is an elastic construction adapted to absorb vibrations.

12. Electric drive according to one of the preceding claims, wherein the outer diameter of the contact roller (132) is 30 - 80 mm, 40 - 60 mm or 45 - 55 mm, and wherein the motor and the roller are arranged to provide a rotational speed of 6.5 - 7 m/s of the outer surface at an efficiency, which is at least 80 %, 90 % or 95 % of the maximum efficiency, wherein the maximum efficiency of the motor occurs at a rotational speed below 6.5 - 7 m/s of the outer surface.

13. Electric drive according to one of the preceding claims, wherein the drive further comprises at least one sealing element (154) at end faces of the stator (120) or of the contact roller (134) or wherein the electric drive is provided with a first and a second rolling-element bearing (170) supporting the roller vs. the stator or the mounting shaft, wherein the rolling-element bearing is a shielded bearing.

14. Electric drive according to one of the preceding claims, wherein the electric drive further comprises an electrical switch located in or at a mounting assembly or located in an actuation element of a Bowden cable controlling the position of the contact roller, wherein the switch is a main switch connecting an electrical power source to the motor and wherein the switch is a sealed or a non-sealed switch, or wherein the electric drive further comprises a key switch connected to a control of the motor, wherein the key switch and the control are arranged to allow distinct speed limits, which are selectable by the position of the key switch, wherein the speed limits preferably comprise at least one of a legal speed limit, an off-road speed limit and a low speed limit.

15. An electric drive according to one of the preceding claims, wherein the mounting assembly comprises an energy source mounting element for mechanically connecting an energy source, in particular an accumulator assembly, wherein the energy source mounting element comprises a releasable snap-in element adapted to receive a complementary snap-in element of the energy source.

## Patentansprüche

1. Elektrischer Antrieb (20) für ein Fahrrad (10), umfassend einen elektrischen Motor und eine Reibrolle (40; 132) mit einer äußeren Kontaktfläche, wobei der elektrische Motor einen Stator (120) umfasst, der eine Vielzahl von Statorwicklungen sowie zugehörige magnetische Rotorelemente (110) aufweist, wobei die Rotorelemente fest an einer Innenfläche (134) der Reibrolle (132) angebracht sind, und wobei die Reibrolle den Stator umgreift.

2. Elektrischer Antrieb nach Anspruch 1, wobei der Stator mit einer Befestigungsachse (140, 150) ausgestattet ist, die fest an den Statorwicklungen angebracht ist, wobei sich die Befestigungsachse längs durch die Reibrolle (132) hindurch erstreckt und an entgegengesetzten Enden der Reibrolle (132) zwei Befestigungsabschnitte (151, 182) aufweist.

3. Elektrischer Antrieb nach Anspruch 2, ferner umfassend ein erstes und ein zweites Wälzlager (170), die die Befestigungsachse (140, 150) und die Reibrolle (132) verbinden und die an entgegengesetzten Längspositionen der Befestigungsachse vorgesehen sind, wobei das erste und das zweite Wälzlager im Wesentlichen die gleichen Abmaße, Leistungsmerkmale, Tragfähigkeit und/oder nominelle Lebensdauer aufweisen.

4. Elektrischer Antrieb nach Anspruch 2 oder 3, wobei die Befestigungsachse zumindest einen Längsabschnitt umfasst, in dem die Befestigungsachse (150) hohl ist und einen inneren Kanal definiert, in dem sich eine elektrische Versorgungsleistung (127) befindet, wobei sich die Versorgungsleitung durch zumindest eine der Endabschnitte der Befestigungsachse hindurch erstreckt und wobei die Versorgungsleitung direkt mit den Statorwicklungen oder deren Windungen verbunden ist, oder wobei die Versorgungsleitung mit einer für einen bürstenlosen Motor vorgesehene Steuerschaltung verbunden ist, die sich innerhalb der Reibrolle befindet, wobei die für einen bürstenlosen Motor vorgesehene Steuerschaltung die damit verbundenen Statorwicklungen ansteuert.

5. Elektrischer Antrieb nach einem der vorangehenden Ansprüche, wobei der elektrische Antrieb ferner eine Rillen aufweisende Kühlfläche (137) an einem Ende der äußeren Kontaktfläche aufweist, wobei der elektrische Antrieb ferner zumindest ein Abdeckelement (154) aufweist, welches des Stator an einer vorderen und/oder an einer hinteren Stirnseite des Stators abdeckt.

6. Elektrischer Antrieb nach einem der vorangehenden Ansprüche, ferner umfassend eine Befestigungsanordnung, die eingerichtet ist, an einem Ständerbefestigungselement eines Fahrradrahmens befestigt zu werden, oder eine Befestigungsanordnung mit einem oberen Abschnitt (261), an dem erste Befestigungselemente (260a-d) vorgesehen sind, wobei die ersten Befestigungselemente eingerichtet sind, an einer Ständervertiefung befestigt zu werden, vorzugsweise als eine Aufschraubplatte von circa 62 x 30 mm oder von 56 x 33 mm ± 5%, 2% oder 1%, oder insbesondere als ein oberer Abschnitt mit einer Bohrung oder mit einem Langloch mit einem Durchmesser beziehungsweise einer Breite von 10 mm ± 5%, 2% oder 1%, oder vorzugsweise als ein Bolzen (260b), der sich von der Befestigungsanordnung weg erstreckt, und welcher mit einem äußeren Schraubengewinde mit einem Durchmesser von vorzugsweise 10 mm ± 5%, 2% oder 1% ausgestattet ist, oder als eine Befestigungsanordnung umfassend eine Schellenklemme, die eingerichtet ist, eine mechanische Verbindung mit beiden Kettenstreben eines Fahrradrahmens vorzugsehen, insbesondere mit einem Endabschnitt von Kettenstreben, der an ein Tretlager eines Fahrrads angrenzt.

7. Elektrischer Antrieb nach Anspruch 6, wobei die Befestigungsanordnung ferner zwei Seitenstreben (232) aufweist, die sich ausgehend von dem oberen Abschnitt (261) erstrecken, wobei zweite Befestigungselemente der Befestigungsanordnung zwei Arme (250) umfasst, die schwenkbar mit den Seitenstreben an den ersten Enden der Arme (250) verbunden sind und mit dem Stator oder mit der Befestigungsachse oder mit den Befestigungslagern an zweiten Enden der Arme verbunden sind, die entgegengesetzt zu den ersten Enden sind, wobei die zweiten Befestigungselemente ferner ein Tensionselement (280) umfassen, welches eines der zweiten Enden der Arme oder den Stator mit einer der Seitenstreben (232) verbindet, vorzugsweise mit einem Ort (282) einer der Seitenstreben (232), welcher näher an dem oberen Abschnitt (261) liegt als die ersten Enden der Arme, wobei das Tensionselement (280) eine Federkraft an dem Stator oder an den zweiten Enden der Arme zu derjenigen Seitenstrebe hin ausübt, mit welcher das Tensionselement (280) verbunden ist, wobei die Arme (250) eine Länge von vorzugsweise 35 - 100 mm haben.

8. Elektrischer Antrieb nach Anspruch 7, wobei das Tensionselement (280) eine Feder, einen Bowdenzug, einen Servomotor, einen Elektromagneten, ein pneumatisches oder hydraulisches Element oder eine Kombination hiervon umfasst, und wobei der elektrische Antrieb vorzugsweise ferner eine Steuerung umfasst, die mit dem Tensionselement verbunden ist, wobei die Steuerung eine mechanische Steuerung ist, vorzugsweise in Form eines Bowdenzugs oder eine elektrische Steuerung ist, wobei die Steuerung eingerichtet ist, die Orientierung der Arme zu steuern, wodurch ein Eingriff-Modus vorgesehen wird, in dem eine Kraft an den Armen ausgeübt wird, die von der Befestigungsanordnung weg weist, und die von dem Tensionselement vorgesehen wird, sowie ein Gelöst-Modus vorgesehen wird, in dem das Tensionselement oder die Steuerung die Reibrolle in Richtung der Befestigungsanordnung setzt.

9. Elektrischer Antrieb nach Anspruch 6, 7 oder 8, wobei die Befestigungsanordnung eine Schnappverbindung umfasst, die den oberen Abschnitt mit einer Basis der Befestigungsanordnung verbindet, welche eingerichtet ist, fest an dem Fahrrad befestigt zu werden, wobei die Schnappverbindung ferner ein Schnelllöseelement umfasst, dessen Betätigung die von der Schnappverbindung vorgesehene Verbindung löst, wobei die Befestigungsanordnung ferner einen Anschlag, eine Führung oder beides umfasst, wobei der Anschlag beziehungsweise die Führung eine Einrastposition für den oberen Abschnitt oder für ein mit dem oberen Abschnitt verbundenes Führungselement vorsieht.

10. Elektrischer Antrieb nach einem der Ansprüche 6 - 9, wobei der Motor eine elektrischer bürstenloser Motor ist, wobei der Antrieb ferner eine Steuerung für einen bürstenlosen Motor sowie hiermit verbundene Ausgangsstufen-Schalter umfasst, wobei der bürstenlose Motor und die Ausgangsstufen-Schalter eine für einen bürstenlosen Motor vorgesehene Steuerschaltung bilden, wobei die Ausgangsstufen-Schalter mit den Statorspulen oder deren Windungen gekoppelt ist, wobei die Ausgabestufenschalter oder die Ausgangsstufen-Schalter sowie die für einen bürstenlosen Motor vorgesehene Steuerschaltung innerhalb der Befestigungsanordnung untergebracht sind, und wobei die Ausgangsstufen-Schalter Halbleiterschalter sind, die in thermischer Verbindung mit der Befestigungsanordnung sind.

11. Elektrischer Antrieb nach einem der Ansprüche 6 - 10, wobei ein mechanisches Dämpferelement innerhalb der Befestigungsanordnung an dem oberen Abschnitt vorgesehen ist, der Kontakt mit einem Fahrrad herstellt, oder wobei das Dämpferelement innerhalb von Komponenten der Befestigungsanordnung vorgesehen ist, die den oberen Abschnitt und den Stator miteinander verbinden, oder wobei das Dämpferelement an oder in der Befestigungsachse (140) vorgesehen ist, wobei das Dämpferelement elastisches Material umfasst oder eine elastische Konstruktion eingerichtet zur Absorption von Vibrationen ist.

12. Elektrischer Antrieb nach einem der vorangehenden Ansprüche, wobei der äußere Durchmesser der Reibrolle (132) 30 - 80 mm, 40 - 60 mm oder 45 - 55 mm beträgt, und wobei der Motor und die Reibrolle eingerichtet sind, eine Drehgeschwindigkeit von 6,5 - 7 m/s an der Außenfläche und einen Wirkungsgrad vorzusehen, der mindestens 80 %, 90 % oder 95 % eines Maximalwirkungsgrads beträgt, wobei der Maximalwirkungsgrad der Motors bei einer Drehgeschwindigkeit von 6,5 - 7 m/s an der Außenfläche auftritt.

13. Elektrischer Antrieb nach einem der vorangehenden Ansprüche, wobei der Antrieb ferner zumindest ein Dichtungselement (154) an Stirnseiten des Stators (120) oder der Reibrolle (134) umfasst, oder wobei der elektrische Antrieb mit einem ersten und einem zweiten Wälzlager (170) aufweist, die die Reibrolle gegenüber dem Stator oder der Befestigungsachse lagern, wobei das Wälzlager ein gekapseltes Lager ist.

14. Elektrischer Antrieb nach einem der vorangehenden Ansprüche, wobei der elektrische Antrieb ferner einen elektrischen Schalter aufweist, der in oder an der Befestigungsanordnung positioniert ist, oder der in einem Betätigungselement eines Bowdenzugs positioniert ist, der die Position der Reibrolle steuert, wobei der Schalter ein Hauptschalter ist, der eine elektrische Leistungsquelle mit dem Motor verbindet und wobei der Schalter ein gekapselter oder nicht gekapselter Schalter ist, oder wobei der elektrische Antrieb ferner einen Schlüsselschalter umfasst, der mit einer Steuerung des Motors verbunden ist, wobei der Schlüsselschalter und die Steuerung eingerichtet ist, unterschiedliche Geschwindigkeitsgrenzen zu erlauben, die durch die Position des Schlüsselschalters wählbar sind, wobei die Geschwindigkeitsgrenzen zumindest eine gesetzliche Geschwindigkeitsgrenze, eine Gelände-Geschwindigkeitsgrenze und eine niedrige Geschwindigkeitsgrenze umfassen.

15. Elektrischer Antrieb nach einem der vorangehenden Ansprüche, wobei die Befestigungsanordnung ein Energiequellen-Befestigungselement zur mechanischen Befestigung einer Energiequelle, insbesondere einer Akkumulatoranordnung, umfasst, wobei das Energiequellen-Befestigungselement ein lösbares Rastelement umfasst, das eingerichtet ist, ein komplementäres Rastelement der Energiequelle aufzunehmen.

## Revendications

1. Dispositif d'entraînement électrique (20) pour une bicyclette (10) comportant un moteur électrique et un galet de contact (40 ; 132) ayant une surface de contact extérieure, dans lequel le moteur électrique comporte un stator (120) ayant une pluralité de bobines de stator ainsi que des éléments de rotor magnétiques correspondants (110), les éléments de rotor étant fixés à une surface intérieure (134) du galet de contact (132), dans lequel le galet de contact enferme le stator.

2. Dispositif d'entraînement électrique selon la revendication 1, dans lequel le stator est pourvu d'un arbre de montage (140, 150) fixé sur les bobines de stator, l'arbre de montage s'étendant longitudinalement à travers le galet de contact (132) et comportant deux sections de fixation (151, 182) aux extrémités opposées du galet de contact (132).

3. Dispositif d'entraînement électrique selon la revendication 2, comportant en outre un premier et un deuxième palier à élément de roulement (170) reliant l'arbre de montage (140, 150) et le galet de contact (132) dans des positions longitudinales opposées de l'arbre de montage, les premier et deuxième paliers ayant sensiblement les mêmes dimensions, performances, capacités de charge et/ou durée de vie.

4. Dispositif d'entraînement électrique selon la revendication 2 ou 3, dans lequel l'arbre de montage comporte au moins une section longitudinale, dans laquelle l'arbre de montage (150) est creux et définit un canal intérieur dans lequel se trouve une ligne d'alimentation électrique (127), la ligne d'alimentation s'étendant à travers au moins une des sections d'extrémité de l'arbre de montage et la ligne d'alimentation étant directement reliée aux bobines ou enroulements de stator ou bien la ligne d'alimentation étant reliée à un circuit de commande de moteur sans balai commandant les bobines de stator qui y sont reliées.

5. Dispositif d'entraînement électrique selon l'une des revendications précédentes, dans lequel le dispositif d'entraînement électrique comporte en outre au moins une surface de refroidissement (137) à une extrémité de la surface de contact extérieure ayant des rainures, le dispositif d'entraînement électrique comportant en outre au moins un élément de recouvrement (154) qui recouvre le stator au niveau d'une face d'extrémité et/ou au niveau d'une face avant du stator.

6. Dispositif d'entraînement électrique selon l'une des revendications précédentes, comportant en outre un ensemble de montage prévu pour être monté sur un élément de montage de béquille d'un cadre de bicyclette ou un ensemble de montage ayant une partie supérieure (261), au niveau de laquelle des premiers éléments de fixation (260a à d) sont prévus, les premiers éléments de fixation étant prévus pour être fixés sur un renfoncement de béquille, de préférence une plaque à visser d'environ 62 x 30 mm ou de 56 x 33 mm ± 5%, 2% ou 1%, ou en particulier une partie supérieure avec un alésage ou une fente ayant un diamètre ou une largeur, respectivement de 10 mm ± 5%, 2% ou 1%, ou avantageusement un goujon (260b) s'étendant depuis l'ensemble de montage, qui est pourvu d'un filetage de vis extérieur ayant un diamètre de préférence de 10 mm ± 5%, 2% ou 1%, ou un ensemble de montage comportant un élément de fixation de support prévu pour procurer un liaison mécanique sur les deux bases d'un cadre de bicyclette, en particulier sur une section d'extrémité de bases butant sur un support inférieur d'une bicyclette.

7. Dispositif d'entraînement électrique selon la revendication 6, dans lequel l'ensemble de montage comporte en outre deux traverses (232) s'étendant depuis la partie supérieure (261), les deuxièmes éléments de fixation de l'ensemble de montage comportant deux bras (250), qui sont reliés de façon pivotante aux traverses au niveau de premières extrémités des bras (250) et sont reliés au stator ou à l'arbre de montage ou aux bagues de montage au niveau de deuxièmes extrémités des bras opposées aux premières extrémités, les deuxièmes éléments de fixation comportant en outre un élément de tension (280) reliant une des deuxièmes extrémités des bras ou du stator à une des traverses (232), de préférence dans un emplacement (282) d'une des traverses (232), qui est plus près de la partie supérieure (261) que les premières extrémités du bras, l'élément de tension (280) exerçant une force élastique sur le stator ou sur les deuxièmes extrémités des bras vers la traverse à laquelle l'élément de tension (280) est relié, les bras (250) ayant une longueur de préférence de 35 à 100 mm.

8. Dispositif d'entraînement électrique selon la revendication 7, dans lequel l'élément de tension (280) comporte un ressort, un câble Bowden, un servomoteur, un électroaimant, un élément pneumatique ou hydraulique ou une combinaison de ceux-ci, et dans lequel le dispositif d'entraînement électrique de préférence comporte en outre une commande reliée à l'élément de tension, la commande étant une commande mécanique, de préférence sous la forme d'un câble Bowden ou étant une commande électrique, la commande étant prévue pour commander l'orientation des bras en procurant un mode d'engagement, dans lequel une force dirigée à l'écart de l'ensemble de montage procurée par l'élément de tension est exercée sur les bras, ainsi qu'un mode de désengagement, dans lequel l'élément de tension ou la commande place le galet de contact vers l'ensemble de montage.

9. Dispositif d'entraînement électrique selon la revendication 6, 7 ou 8, dans lequel l'ensemble de montage comporte un encliquetage reliant la partie supérieure à une base de l'ensemble de montage prévue pour être fixée sur la bicyclette, l'encliquetage comportant en outre un élément de libération rapide, dont l'actionnement libère la liaison procurée par l'encliquetage, l'ensemble de montage comportant en outre une butée, un guidage ou les deux, la butée ou le guidage, respectivement, procurant une position d'encliquetage pour la partie supérieure ou pour un élément de guidage fixé sur la partie supérieure.

10. Dispositif d'entraînement électrique selon l'une des revendications 6 à 9, dans lequel le moteur est un moteur électrique sans balai, le dispositif d'entraînement comportant en outre un dispositif de commande de moteur sans balai et des commutateurs d'étage de sortie reliés à celui-ci en formant un circuit de commande de moteur sans balai, les commutateurs d'étage de sortie étant reliés aux bobines de stator ou aux enroulements de celles-ci, les commutateurs d'étage de sortie ou les commutateurs d'étage de sortie ainsi que le dispositif de commande de moteur sans balai étant logés dans l'ensemble de montage et les commutateurs d'étage de sortie étant des commutateurs à semi-conducteur qui sont en liaison thermique avec l'ensemble de montage.

11. Dispositif d'entraînement électrique selon l'une des revendications 6 à 10, dans lequel un élément d'amortisseur mécanique est prévu dans l'ensemble de montage au niveau de la partie supérieure procurant un contact avec une bicyclette ou dans lequel l'élément d'amortisseur est prévu dans des composants de l'ensemble de montage connectant la partie supérieure et le stator, ou bien dans lequel l'élément d'amortisseur est prévu au niveau de ou dans un arbre de montage (140), l'élément d'amortisseur comportant une matière élastique ou étant d'une construction élastique prévue pour absorber des vibrations.

12. Dispositif d'entraînement électrique selon l'une des revendications précédentes, dans lequel le diamètre extérieur du galet de contact (132) est de 30 à 80 mm, 40 à 60 mm ou de 45 à 55 mm, et le moteur et le galet sont prévus pour procurer une vitesse de rotation de 6,5 à 7 m/s de la surface extérieure à un rendement, qui est au moins de 80 %, 90 % ou 95 % du rendement maximum, le rendement maximum du moteur se produisant à une vitesse de rotation en-dessous de 6,5 à 7 m/s de la surface extérieure.

13. Dispositif d'entraînement électrique selon l'une des revendications précédentes, dans lequel le dispositif d'entraînement comporte en outre au moins un élément d'étanchéité (154) au niveau des faces d'extrémité du stator (120) ou du galet de contact (134) ou dans lequel le dispositif d'entraînement électrique est pourvu d'un premier et d'un deuxième palier à élément de roulement (170) supportant le galet par rapport au stator ou à l'arbre de montage, le palier à élément de roulement étant un palier protégé.

14. Dispositif d'entraînement électrique selon l'une des revendications précédentes, dans lequel le dispositif d'entraînement électrique comporte en outre un commutateur électrique situé dans ou au niveau d'un ensemble de montage ou situé dans un élément d'actionnement d'un câble Bowden qui commande la position du galet de contact, le commutateur étant un commutateur principal reliant une source de courant électrique au moteur et le commutateur étant un commutateur étanche ou non, ou dans lequel le dispositif d'entraînement électrique comporte en outre un commutateur à clef relié à une commande du moteur, le commutateur à clef et la commande étant prévus pour permettre des vitesses limites distinctes, qui peuvent être sélectionnées par la position du commutateur à clef, les vitesses limites comportant de préférence au moins une d'une vitesse limite légale, d'une vitesse limite hors route et d'une vitesse limite faible.

15. Dispositif d'entraînement électrique selon l'une des revendications précédentes, dans lequel l'ensemble de montage comporte un élément de montage de source d'énergie destiné à relier mécaniquement une source d'énergie, en particulier un ensemble d'accumulateur, l'élément de montage de source d'énergie comportant un élément à encliquetage libérable prévu pour recevoir un élément à encliquetage complémentaire de la source d'énergie.
